# EUROPÄISCHE PATENTSCHRIFT

(11) **EP 4 314 579 B1**
(45) Veröffentlichungstag und Bekanntmachung des Hinweises auf die Patenterteilung: **18.02.2026**
(21) Anmeldenummer: 22727756.3
(22) Anmeldetag: 28.04.2022
(51) Int. Cl.: F16C 25/06, F03D 80/70, F16C 19/36, F16C 19/54

(54) **VERFAHREN ZUM AUFBRINGEN EINER LAGERVORSPANNUNG AUF EINE LAGEREINHEIT SOWIE LAGEREINHEIT**
METHOD FOR APPLYING BEARING PRETENSION TO A BEARING UNIT, AND BEARING UNIT
PROCÉDÉ POUR APPLIQUER UNE PRÉCONTRAINTE DE PALIER À UNE UNITÉ DE PALIER, ET UNITÉ DE PALIER

(30) Priorität: 29.04.2021 DE 102021204286
(43) Veröffentlichungstag der Anmeldung: 07.02.2024
(73) Patentinhaber: Eolotec GmbH, 90429 Nürnberg (DE)
(72) Erfinder: REICHHART, Marc, 90763 Fürth (DE); LOSERT, Wolfgang, 90453 Nürnberg (DE)
(74) Vertreter: FDST Patentanwälte
(86) Internationale Anmeldenummer: PCT/EP2022/061422
(87) Internationale Veröffentlichungsnummer: WO 2022/229359

(56) Entgegenhaltungen:
- EP-B1- 2 278 180
- DE-U1- 202015 001 277
- US-A- 2 694 430

## Beschreibung

Die Erfindung betrifft ein Verfahren zum Aufbringen einer Lagervorspannung auf eine Lagereinheit sowie eine Lagereinheit.

Bei der Lagereinheit handelt es sich insbesondere um eine Großlagereinheit und speziell um eine Lagereinheit einer Windkraftanlage und insbesondere um ein Hauptlager einer Windkraftanlage.

Unter Großlagereinheiten werden vorliegend allgemein Wälzlager verstanden, die für hohe Traglasten beispielsweise von mehreren Tonnen ausgebildet sind und typischerweise einen Durchmesser größer 0,5 Meter, vorzugsweise größer 1m und vorzugsweise größer 1,5m und insbesondere größer zwei Meter aufweisen. Der Durchmesser ist dabei bezogen auf einen Innendurchmesser eines (kleinsten) Lagerrings der Großlagereinheit.

Das Hauptlager einer Windkraftanlage ist eine derartige Großlagereinheit. Mit dem Hauptlager wird ein Rotor der Windkraftanlage gelagert, welcher eine Rotornabe aufweist oder mit einer solchen verbunden ist. An dieser sind die einzelnen Rotorblätter angeordnet, über die die Windkraft aufgenommen und in eine Rotationsbewegung der Rotornabe übertragen wird. Der Rotor weist beispielsweise eine im Betrieb rotierenden Lagerwelle auf und ist über das Hauptlager gegenüber ein Lagergehäuse, beispielsweise ein separates Gehäuse oder auch ein Teilstück eines Maschinenträgers, gelagert. Alternativ ist der Rotor gegenüber einer im Betrieb feststehenden Lagerwelle über das Hauptlager gelagert.

Vorgespannte angestellte (Wälz-) Lagerungen gehören seit langer Zeit zum Stand der Technik. Sie sind z.B. aus Kegelrollenlagern oder Schrägkugellagern aufgebaut. Angestellte Lager weisen mindestens zwei Lager auf, die typischerweise voneinander in Axialrichtung voneinander beabstandet sind. Es sind Großlagereinheiten in sogenannter X- oder O-Anordnung aus jeweils mindestens zwei Lagern bekannt. Die Vorspannung wird in den meisten Fällen über einen verschiebbaren Lagerring aufgebracht. Dieser wird bei der Montage in axialer Richtung solange verschoben, bis die gewünschte Vorspannung erreicht ist. Bei einer O-Anordnung wird die Vorspannung über Verschieben eines Innenrings, bei einer X-Anordnung hingegen über Verschieben eines Außenrings eingebracht.

Aus der EP 2710271 B1 ist eine derartige vorgespannte, angestellte Hauptlagereinheit einer Windkraftanlage zu entnehmen.

Bei Großlagereinheiten sind die Lagersitze in der Regel als Presssitz mit einer großen Überpressung ausgeführt, um ein sogenanntes Ringwandern und damit Passungsrost und Verschleiß im Lagersitz zu verhindern. Dies führt dazu, dass eine relativ große axiale Kraft notwendig ist, um die Lagerringe zu verschieben. Hinzu kommt noch die gewünschte Vorspannkraft. Die Kräfte zur axialen Verschiebung des Lagerrings zur Erzeugung der gewünschten Vorspannkraft werden beispielsweise durch hydraulische Pressen aufgebracht.

In der Wälzlagertechnik gehören Wellenmuttern (auch Nutmuttern genannt) seit langem zum Stand der Technik und sind durch verschiedene Normen (z.B. DIN981) definiert. Derartige Wellenmuttern werden beispielsweise verwendet, um Wälzlager in axialer Richtung zu fixieren. Im Falle von angestellten Lagerungen wie zum Beispiel Schrägkugellager oder Kegelrollenlager in X- oder O-Anordnung werden Wellenmuttern auch dazu verwendet, um eine definierte Lagervorspannung in das System einzubringen.

Derartige Wellenmuttern weisen am Innendurchmesser ein metrisches oder ein Trapezgewinde auf. Wird auf die Mutter ein definiertes Drehmoment aufgebracht, kann dadurch eine Axialkraft zum Vorspannen einer Lagerung erzeugt werden. Alternativ kann die Mutter auch um einen definierten Verdrehwinkel rotiert werden, um einen definierten Vorspannweg zu erzeugen, der sich durch die Gewindesteigung ergibt.

Wellenmuttern finden vor allem bei kleinen Lagern mit bis zu einigen 100mm Durchmesser Anwendung, da hier die notwendigen Vorspannkräfte eher gering sind und leicht aufgebracht werden können. Hier reicht ein mit normalen Mitteln aufzubringendes Anzugsmoment aus.

Bei Lageranwendungen mit großen Lagern, also größer 0,5m Durchmesser bis hin zu Durchmessern von mehreren Metern sind sehr hohe Drehmomente erforderlich, um über eine Mutter die notwendige Vorspannkraft von bis zu mehreren 100kN, teilweise mehreren 1000kN zu erreichen. Zusätzlich zur Vorspannkraft müssen auch noch hohe Reibkräfte im Lagersitz überwunden werden, da derartige Lagerringe oft mit einem starken Presssitz ausgeführt sind. Soll die Mutter unter Betriebslast, also z.B. während des Betriebs einer Windkraftanlage mit montierter und ggf. auch rotierender Nabe verstellt werden können, kommen nochmals hohe Kräfte hinzu.

In der EP 3 489 534 B1 wird zur Einstellung der Vorspannung eines Hauptlagers einer Windkraftanlage eine Wellenmutter beschrieben, bei der zur Reduzierung der Reibung eine spezielle Gewindegeometrie vorgesehen ist. Dadurch kann das erforderliche Anzugsmoment zur Aufbringung oder Änderung der Lagervorspannung reduziert werden. Dennoch sind weiterhin sehr hohe Anzugsmoment erforderlich, was ein teures und großes Anzugswerkzeug erforderlich machen.

Aus EP 2 278 180 B1, das die Merkmale des Oberbegriffs der Ansprüche 1 und 13 offenbart, ist die Einstellung einer Lagervorspannung mit Hilfe einer hydraulischen Spannvorrichtung zu entnehmen. Ein Klemmring wird zunächst mit Hilfe von Schrauben an der Welle befestigt. Ein Kolben wird hydraulisch gegen einen Lagerring gepresst und der Lagerring wird hydraulisch in der gewünschten Position fixiert.

Aus DE 20 2015 001 277 U1 ist ebenfalls eine hydraulisch unterstützte Einstellung der Lagervorspannung zu entnehmen. Über eine Druckkammer wird ein Hydraulikdruck auf einen Lagerring ausgeübt und dieser verstellt. Die eingenommene Axialposition wird mit Hilfe von Schrauben fixiert, die sich an einem Gehäusekörper abstützen.

Gemäß US 2 694 430 A wird eine Wellenmutter aufgeschraubt und die Lagervorspannung eingestellt. Zur Sicherung der Wellenmutter weist diese einen flexiblen Abschnitt auf, der mit Hilfe einer Schraube von der Wellenmutter weggedrückt wird, so dass die Gewindeteile der Wellenmutter und der Welle gegeneinander verspannt werden, so dass die Position gesichert wird.

Ausgehend hiervon liegt der Erfindung die Aufgabe zu Grunde, bei einer Lagereinheit, insbesondere eine Großlagereinheit, speziell einer Windkraftanlage das Aufbringen einer Vorspannung mit Hilfe eines beispielsweise als Wellenmutter ausgebildeten Spannrings zu ermöglichen, wobei nur geringe Anzugsmomente für den Spannring erforderlich sind.

Die Aufgabe wird gemäß der Erfindung gelöst durch ein Verfahren zum Aufbringen einer Lagervorspannung auf eine Lagereinheit sowie durch eine Lagereinheit. Bei der Lagereinheit handelt sich insbesondere um eine Großlagereinheit, speziell einer Windkraftanlage und insbesondere um eine Hauptlagereinheit einer solchen Windkraftanlage. Die Lagereinheit erstreckt sich entlang einer Rotationsachse in einer Axialrichtung und weist zumindest einen verstellbaren Lagerring auf, der zur Aufbringung der Lagervorspannung in Axialrichtung entlang eines Ringträgers verschiebbar ist. Der Ringträger weist ein Gewinde auf, welches zumindest in einer Ausführungsvariante Teil eines optionalen Gewindeelementes ist. Zum Aufbringen der Lagervorspannung ist ein Spannring mit Gewinde vorgesehen, welcher auf das Gewinde des Ringträgers aufschraubbar ist und dadurch gegen den Lagerring verschraubbar ist.

Weiterhin wird in einem ersten Schritt ein Axialspiel zwischen dem Lagerring und dem Spannring und/oder zwischen dem Lagerring und dem Gewindeelement eingestellt, auf das der Spannring geschraubt ist. Das Gewindeelement ist dabei an einem Hauptteil des Ringträgers befestigt. Im ersten Schritt wird also allgemein ein Axialspiel, also ein axialer Abstand zwischen dem Lagerring und dem Spannring bzw. dem Gewindeelement eingestellt.

Im Zustand vor dem ersten Schritt liegt dabei typischerweise der Spannring bereits am Lagerring an, wurde also zunächst bereits gegen den Lagerring verschraubt. Grundsätzlich besteht auch die Möglichkeit, dass bereits vor dem ersten Schritt ein Axialspiel besteht.

In einem weiteren Schritt wird der Spannring gegen den Lagerring verschraubt. Aufgrund des zuvor eingestellten Axialspiels ist der Spannring lastfrei, sodass im nachfolgenden weiteren Schritt der Spannring lastfrei gegen den Lagerring verschraubt werden kann. Unter "frei" verschraubbar wird verstanden, dass der Spannring keine Axialkraft auf den Lagerring ausübt. Da bei diesem weiteren Verschrauben der Lagerring gerade nicht verschoben wird, muss lediglich ein geringes Drehmoment aufgebracht werden.

Die Lagervorspannung wird erfindungsgemäß über zumindest ein Hilfs-Spannelement aufgebracht, also verändert. Hierzu bestehen verschiedene Möglichkeiten und Varianten. Diese Ausgestaltung mit dem Hilfs-Spannelement nutzt aus, dass die erforderliche Kraft zur Erzeugung der Vorspannung nicht von dem Spannring, sondern mittels des zumindest einen Hilfs-Spannelements aufgebracht wird. Der Spannring wird daher in allen Fällen lastfrei verdreht, ohne dass er also beim Verdrehen die Vorspannung auf den Lagerring erzeugt / verändert und insbesondere die Vorspannung erhöht. Der Spannring wird nach Erzeugen und dem Einstellen der Vorspannkraft über das Hilfs-Spannelement typischerweise gegen den Lagerring verschraubt, liegt zumindest an diesem an. Das Hilfs-Spannelement wird typischerweise wieder entfernt. Die eingestellte Vorspannkraft wird dann durch den Spannring gehalten und dadurch im weiteren Betrieb auf den Lagerring aufgebracht.

Mittels des zumindest einen Hilfs-Spannelements wird daher insgesamt eine Axialkraft ausgeübt. Um dies zu ermöglichen, ist ein und sind insbesondere zwei Widerlager vorgesehen, an denen sich das Hilfs-Spannelement abstützt. Diese Widerlager stehen üblicherweise einerseits mit dem Lagerring und andererseits mit dem Spannring zumindest mittelbar in Verbindung, sodass die ausgeübte Kraft auf diese beiden Komponenten übertragen wird. Alternativ ist eines oder sind beide Widerlager durch den Lagerring und/oder den Spannring gebildet.

Zur Einstellung der Lagervorspannung wird dabei mit Hilfe des Hilfs-Spannelements der Lagerring in Axialrichtung versetzt, so dass also die Lagervorspannung erhöht wird. Das Hilfs-Spannelement übt daher eine Axialkraft aus. Grundsätzlich kann in gleicher Weise der Lagerring auch entgegen der Axialrichtung versetzt werden, um z.B. die Lagervorspannung zu reduzieren.

Die nachfolgend im Zusammenhang mit dem Verfahren angeführten Vorteile und bevorzugten Ausgestaltungen sind sinngemäß auch auf die Lagereinheit zu übertragen und umgekehrt.

Sofern vorliegend davon gesprochen wird, dass eine Lagervorspannung aufgebracht wird, so wird hierunter insbesondere die Einstellung der Vorspannung bei einer (Erst-) Montage der Lagereinheit verstanden. Ergänzend wird hierunter auch eine Verstellung der Lagervorspannung einer bereits montierten Lagereinheit verstanden, insbesondere auch unter einer Betriebsbeanspruchung, also unter Last. Bei einer Windkraftanlage bedeutet dies beispielsweise, dass die Lagervorspannung insbesondere im montierten Zustand aufgebracht wird, wobei im montierten Zustand die Gewichtslast der Blätter, der Nabe und der Rotorwelle auf die Lagereinheit wirkt. Bevorzugt erfolgt die Einstellung der Lagervorspannung dabei ohne Rotation der Nabe, wenn also die Anlage nicht im Betrieb im engeren Sinne ist.

Bei der Lagereinheit handelt sich bevorzugt um eine in der Beschreibungseinleitung beschriebene vorgespannte, angestellte Großlagereinheit in X- oder- O-Anordnung aus zwei zueinander beabstandeten Lagern, wie sie beispielsweise in der EP 2 710 271 B, beschrieben ist.

Bevorzugt sind um den Umfang insbesondere gleichmäßig verteilt mehrere Hilfs-Spannelemente vorgesehen. Zumindest 3, vorzugsweise zumindest 6, 8 oder auch zumindest 12 Hilfs-Spannelemente sind vorgesehen. Die erforderliche Axialkraft zum Erzeugen des Axialspiels wird daher insbesondere sukzessive von diesen mehrere Hilfs-Spannelemente erzeugt. Diese sind dabei insbesondere bolzenförmig ausgebildet, und speziell als Schraubbolzen oder auch nach Art eines Hydraulikstempels bei einer hydraulischen Einrichtung ausgebildet. Die erforderliche Kraft wird also beispielsweise mechanisch oder auch hydraulisch erzeugt.

In der bevorzugten Ausgestaltung handelt sich bei dem Spannring um eine Wellenmutter mit Innengewinde und der Ringträger ist als eine Welle ausgebildet, auf der endseitig ein Außengewinde aufgebracht ist. Diese kann eine feststehende Welle sein, ist bevorzugt jedoch eine im Betrieb rotierenden Welle, die insbesondere mit der Nabe bei einer Windkraftanlage verbunden ist. Bei dieser Ausgestaltung handelt sich bei dem Lagerring daher typischerweise um einen Innenring, der verstellt wird, wie dies typischerweise bei einer O-Anordnung der Fall ist.

Alternativ ist der Spannring als ein Ring mit Außengewinde ausgebildet und der Ringträger ist ein den Spannring umgebender äußere Teil der Lagereinheit mit einem Innengewinde, speziell handelt sich hierbei um ein Lagergehäuse. Bei dem Lagerring handelt sich in diesem Fall insbesondere um einen Außenring, der zur Erzeugung der Lagervorspannung verstellt wird, wie dies typischerweise bei einer X-Anordnung der Fall ist.

Gemäß einer bevorzugten Ausgestaltung wird mit Hilfe des zumindest einen Hilfs-Spannelements im ersten Schritt das Axialspiel eingestellt. Das Hilfs-Spannelement hat daher eine Doppelfunktion, nämlich zum einen die Einstellung des Axialspiels und zum anderen die Erzeugung der Vorspannung. Vorzugsweise erfolgt dies gleichzeitig, d. h. bei der Einstellung des Axialspiels wird zugleich eine Axialkraft auf den Lagerring ausgeübt und dieser insbesondere auch verschoben. Zumindest bei einigen Ausgestaltungen wird zur Ausbildung des Axialspiels zwischen Lagerring und dem Spannring der Spannring nicht verdreht.

Gemäß einer bevorzugten Ausgestaltung sind die Lagereinheit und das Hilfs-Spannelement derart ausgebildet, dass sich das zumindest eine Hilfs-Spannelement zumindest mittelbar am Spannring abstützen kann und bei dem Verfahren zur Erzeugung des Axialspiels auch abstützt. D.h. der Spannring bildet ein Widerlager für das zumindest eine Hilfs-Spannelement.

Gemäß einer ersten bevorzugten Variante wird im ersten Schritt der Lagerring in Axialrichtung verschoben. Es wird also bereits im ersten Schritt durch Verschieben des Lagerrings die Lagervorspannung eingestellt, insbesondere erhöht. Hierzu stützt sich das Hilfs-Spannelement direkt an dem Lagerring ab und drückt diesen in Axialrichtung. D.h. der Lagerring bildet das zweite Widerlager.

Bevorzugt weist insbesondere für diese erste Variante der Spannring eine Durchführung, beispielsweise eine Gewindebohrungen auf, durch die das (jeweilige) Hilfs-Spannelement hindurchgeführt ist. In diesem Fall ist daher der Spannring direkt als das eine Widerlager ausgebildet.

Bevorzugt ist das zumindest eine Hilfs-Spannelement als eine Schraube vorzugsweise mit Feingewinde ausgebildet. Diese ist insbesondere durch die Gewindebohrung im Spannring hindurchgeschraubt. Die Schraube stützt sich mit ihrem einen Ende vorzugsweise unmittelbar am Lagerring ab, sodass bei einem Schraubvorgang eine Axialkraft auf den Lagerring erzeugt wird und diesen in Axialrichtung von dem Spannring wegdrückt und dabei verschiebt und die Lagervorspannung erhöht.

In zweckdienlicher Ausgestaltung wird nach der Einstellung des Axialspiels das zumindest eine Hilfs-Spannelement wieder gelöst und beispielsweise im Falle der Ausbildung als eine Schraube wieder zurückgedreht oder in sonstiger Weise zurückgezogen wird. Allgemein erfolgt also eine Entlastung des Hilfs-Spannelementes und der Spannring ist frei auf dem Gewinde des Ringträgers drehbar. Anschließend wird dann der Spannring über das Axialspiel hinweg in Richtung zum Lagerring verschraubt, insbesondere bis er an diesem anliegt.

Nach dem Verschieben des Lagerrings mithilfe des zumindest einen Hilfs-Spannelements verbleibt der Lagerring - je nach aktuellen Bedingungen - allein durch Reibung an der gewünschten und durch das zumindest eine Hilfs-Spannelement eingestellten Axialposition.

Unter bestimmten Bedingungen, insbesondere bei Lasteinwirkungen im Betrieb ist vorzugsweise zumindest ein Sicherungselement vorgesehen, über das die axiale Position des Lagerrings in der gewünschten Position gesichert werden kann und beim Verfahren gesichert wird. Bevorzugt sind um den Umfang des Lagerrings verteilt mehrere derartiger Sicherungselemente vorgesehen.

Bevorzugt ist das zumindest eine oder sind die mehreren Sicherungselemente dabei - vorzugsweise nur - in (Haupt-) Lastzonen angeordnet, in denen speziell im Betrieb eine erhöhte Belastung auftritt. Um den Umfang verteilt wird ein jeweiliger Lagerring typischerweise in einigen Umfangsbereichen einer höheren (axialen) Belastung ausgesetzt als in anderen Umfangsbereichen. Diese Bereiche mit der höheren Belastung bilden die Hauptlastzonen. Die Sicherungselemente sind also vorzugsweise nicht gleichverteilt um den Umfang herum angeordnet.

Bei dem Sicherungselement handelt sich dabei insbesondere um einen radialen Bolzen, der durch den Ringträger in radialer Richtung durchgeführt ist. Dieser weist daher insbesondere eine Durchführung auf, durch die das Sicherungselement hindurchgeführt werden kann. Über das Sicherungselement erfolgt eine reib- und/oder formschlüssige Sicherung des Lagerrings.

Das am Ringträger ausgebildete Gewinde ist beispielsweise unmittelbarer Teil eines einstückigen, insbesondere monolithischen Ringträgers, ist also beispielsweise unmittelbar auf die Welle aufgebracht. In bevorzugter Alternative ist ein separates Gewindeelement vorgesehen, welches endseitig an einem Hauptteil des Ringträgers insbesondere lösbar z.B. über Schrauben befestigt ist und mit diesem Hauptteil den Ringträger bildet. Auf dieses Gewindeelement ist der Spannring aufgeschraubt

Gemäß einer zweiten bevorzugten Variante wird bei einer solchen Ausgestaltung mit Gewindeelement beim ersten Schritt des Einstellens des Axialspiels nunmehr das Gewindeelement bevorzugt mit Hilfe des Hilfs-Spannelements oder alternativ auch mit Hilfe des Spannrings axial verschoben. Es wird also - anders als bei der ersten Variante - das Gewindeelement und nicht der Lagerring im ersten Schritt axial und zwar entgegen der Axialrichtung verschoben, so dass sich das Axialspiel zwischen dem Gewindeelement und dem Hauptteil und damit dem Lagerring einstellt. Das Gewindeelement wird hierzu zuvor gelöst, ist also nicht am Hauptteil befestigt, so dass es relativ zu diesem versetzt werden kann.

Gemäß einer ersten Ausgestaltung wird der Spannring zusammen mit dem Gewindeelement mit von dem Hauptteil des Ringträgers und damit von dem Lagerring weggedrückt. Hierdurch wird das Axialspiel zwischen dem Lagerring und dem Spannring erzeugt. Dies erfolgt beispielsweise mit Hilfe einer Abdrückvorrichtung, bei der z.B. Abdrückschrauben durch Gewindebohrungen im Gewindeelement hindurchgeführt sind und sich am Hauptteil abstützen.

Bei dieser ersten Ausgestaltung wird also zunächst der Spannring relativ zum Lagerring versetzt. Anschließend wird er wieder gegen den Lagerring verschraubt.

Gemäß einer alternativen zweiten Ausgestaltung wird das Gewindeelement mit Hilfe des Spannrings von dem Hauptteil weggedrückt, indem also der Spannring in Richtung zum Lagerring verschraubt wird. Dabei stützt er sich am Lagerring ab, so dass das (lose geführte) Gewindeelement weggedrückt wird und das Axialspiel zum Hauptteil und damit zum Lagerring eingestellt wird.

In beiden Ausgestaltungen wird dann weiterhin mit dem zumindest einen Hilfs-Spannelement das Gewindeelement wieder in Axialrichtung gegen den Hauptteil verspannt. Der Spannring liegt dabei am Lagerring an und verschiebt diesen in Axialrichtung, überträgt also die Axialkraft.

Das Hilfs-Spannelement stützt sich einerseits vorzugsweise an dem Gewindeelement ab und andererseits an dem Hauptteil des Ringträgers.

Nachfolgend wird bei dieser Ausführungsvariante wiederum der Spannring in Richtung zum Lagerring verschraubt, speziell bis er an diesem anliegt. Dabei wird der Spannring auf dem Gewindeelement in Axialrichtung weiter nach vorne versetzt.

Nachfolgend wird dann in einem zusätzlichen Schritt das Gewindeelement mit dem Spannring in Axialrichtung zum Ringträger verstellt. Dabei drückt der Spannring gegen den Lagerring, so dass die Lagervorspannung erhöht wird. Die Aufbringung der Vorspannung erfolgt daher bei dieser zweiten Variante erst in diesem zusätzlichen Schritt. Hierfür sind die Hilfs-Spannelemente, insbesondere Befestigungselemente, beispielsweise Schrauben oder alternativ auch Hydraulikstempel vorgesehen. Mit deren Hilfe kann das Gewindeelement in Richtung zum Hauptteil des Ringträgers in Axialrichtung versetzt werden.

Über diese Hilfs-Spannelemente erfolgt vorzugsweise beispielsweise auch die Befestigung am Hauptteil. Typischerweise ist das Gewindeelement mittels Axialschrauben am Hauptteil befestigt. Diese dienen nunmehr dazu, die erforderliche Vorspannkraft aufzubringen und das Gewindeelement in Axialrichtung zu verschieben.

Die Schritte zum Einstellen des Axialspiels im ersten Schritt und ggf. das nachfolgende, freie Verschrauben des Spannrings gegen den Lagerring, sowie das Aufbringen der Axialkraft mittels der Hilfs-Spannelemente und das dadurch bedingte Verschieben des Lagerrings, werden vorzugsweise wiederholt, um sukzessive die gewünschte Lagervorspannung aufzubringen.

Allgemein wird im ersten Schritt ein Axialspiel typischerweise im Bereich von mehreren zehntel Millimeter bis einige wenige Millimeter (maximal 5 mm, vorzugsweise maximal 2 mm und vorzugsweise maximal 1 mm) eingestellt. Zur Einstellung der Lagervorspannung wird der Lagerring typischerweise um diese genannten Werte in Axialrichtung versetzt.

In einer bevorzugten Ausgestaltung wird - sofern dies erforderlich ist - im ersten Schritt zunächst das Axialspiel zwischen dem Spannring und dem Lagerring ausgebildet, und zwar insbesondere durch ein zurückdrehen oder Lösen des Spannrings. Anschließend wird mittels des Hilfs-Spannelements der Lagerring entgegen der Axialrichtung und damit zur Reduzierung der Lagervorspannung versetzt.

Im Unterschied zu den zuvor beschriebenen beiden Varianten, bei der eine Erhöhung der Lagervorspannung eingestellt wird, wird hiermit daher die Lagervorspannung reduziert.

Bei den beiden Varianten zur Erhöhung der Lagervorspannung wird allgemein die von den Hilfs-Spannelementen erzeugte Axialkraft über den Spannring, welcher am Lagerring anliegt, auf den Lagerring übertragen (ohne Drehbewegung des Spannrings).

Beim Reduzieren der Lagervorspannung erfolgt quasi ein axiales Ziehen am Lagerring anstelle des axialen Drückens bei der Erhöhung der Lagervorspannung. Sowohl die Erhöhung der Lagervorspannung als auch die Reduzierung der Lagervorspannung wird jeweils bei Bedarf durchgeführt. Die Reduzierung der Lagervorspannung ist beispielsweise insbesondere im Rahmen von Prüf- oder Einstellmaßnahmen beispielsweise bei Prototypen von besonderer Bedeutung.

Die Hilfs-Spannelemente sind hierbei wiederum vorzugsweise als Schrauben ausgeführt, die in entsprechende Gewindebohrungen am Lagerring einschraubbar sind und bei der Einstellung auch eingeschraubt werden. Mit ihrem Schraubkopf stützen sie sich an einem Widerlager ab, sodass bei einem Drehen der Schrauben der Lagerring entgegen der Axialrichtung verschoben wird. Das Widerlager ist dabei vorzugsweise durch den Spannring gebildet, welcher geeignete Durchführungen/Bohrungen aufweist, durch die die Hilfs-Spannelemente geführt sind. Alternativ zu der Ausbildung als Schrauben sind auch andere Varianten möglich, bei denen insbesondere Bolzen mit dem Lagerring formschlüssig beispielsweise nach Art einer Bajonettverbindung verbunden werden und mittels einer Abzugsvorrichtung entgegen der Axialrichtung gezogen werden. Auch bei dieser Variante sind die Bolzen vorzugsweise durch Bohrungen im Spannring hindurchgeführt wird und werden beispielsweise mittels der Abzugsvorrichtung gegriffen.

Vorzugsweise ist der Spannring sowohl für die Durchführung von (ersten) Hilfs-Spannelementen zur Erhöhung der Lagervorspannung als auch zur Durchführung von (zweiten) Hilfs-Spannelementen zur Reduzierung der Lagervorspannung ausgebildet. Dabei können neben Bohrungen, insbesondere Gewindebohrungen für als Schrauben ausgebildete (erste) Hilfs-Spannelemente zusätzliche weitere, einfache Bohrungen für die (zweiten) Hilfs-Spannelemente ausgebildet sein. Die (Gewinde-) Bohrungen für die (ersten) Hilfs-Spannelemente können jedoch auch zugleich als Bohrungen für die zweiten Hilfs-Spannelemente herangezogen werden, die dann beispielsweise einen angepassten, geringeren Durchmesser aufweisen.

Auf Seiten des Lagerrings sind um den Umfang verteilt vorzugsweise mehrere Aufnahmen ausgebildet, in die das jeweilige (zweite) Hilfs-Spannelement mit seiner Spitze eingesteckt (eingeschraubt) und/oder formschlüssig verbunden werden kann. Die entsprechenden Bohrungen innerhalb des Spannrings sind dabei koaxial zu diesen Aufnahmen auszurichten. Dies bedeutet, dass die Bohrungen innerhalb des Spannrings die gleiche Verteilung um den Umfang wie die Aufnahmen im Lagerring aufweisen. Das koaxiale Ausrichten erfolgt beispielsweise durch eine definierte Einstellung einer Drehposition des Spannrings beim Zurückdrehen/Lösen.

Um bei der axialen Verstellung des Lagerrings die Reibung zwischen dem Lagerring und dem Ringträger zu reduzieren ist eine Vorrichtung mit einem reibungsmindernden Element vorgesehen und ausgebildet, welches zwischen den Lagerring und den Ringträger einpressbar ist. Bei diesem reibungsmindernden Element handelt sich beispielsweise um einen flüssigen Schmierstoff wie beispielsweise Öl, welches beispielsweise nach Art eines Öl-Druckverbandes eingesetzt wird. Alternativ handelt es sich um ein Gleitelement.

Ausführungsbeispiele der Erfindung werden nachfolgend anhand der Figuren näher erläutert. Diese zeigen in schematischen Darstellungen:
- Fig 1: eine ausschnittweise Schnittansicht durch eine Lagereinheit, speziell ein Hauptlager einer Windkraftanlage,
- Fig 2A: eine Aufsicht auf einen als Wellenmutter ausgebildeten Spannring,
- Fig 2B: eine Schnittansicht entlang der Schnittlinie A-A in Fig 2A,
- Fig 3A bis 3D: ausschnittweise Schnittdarstellungen der Lagereinheit im Bereich eines verstellbaren Lagerrings zur Erläuterung der Einstellung der Lagervorspannung gemäß einer ersten Variante,
- Fig 4: eine ausschnittsweise Schnittansicht der Lagereinheit im Bereich des verstellbaren Lagerrings mit einem Gewindeelement,
- Fig 5A bis 5B: ausschnittweise Schnittdarstellungen der Lagereinheit im Bereich eines verstellbaren Lagerrings zur Erläuterung der Einstellung der Lagervorspannung Spannung gemäß einer zweiten Variante,
- Fig 6A bis 6B: ausschnittweise Schnittdarstellungen im Bereich des verstellbaren Lagerrings zur Illustration einer Vorrichtung zur Verringerung der Gleitreibung, sowie
- Fig 7A bis 7E: ausschnittweise Schnittdarstellungen im Bereich des verstellbaren Lagerrings zur Illustration von unterschiedlichen Varianten zur Sicherung der axialen Position des Lagerrings.

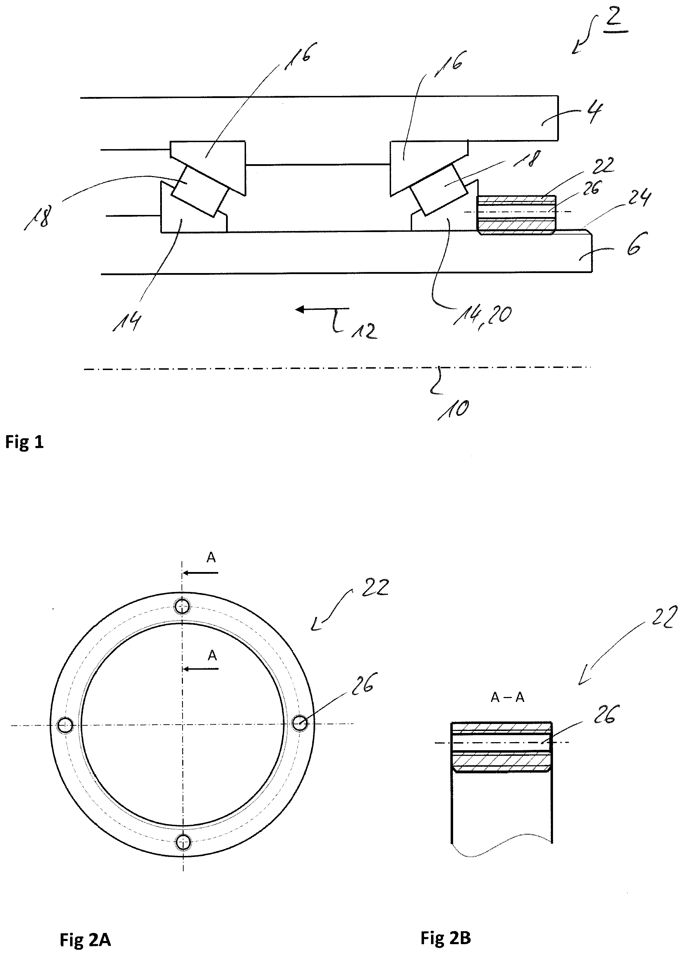

Die in der Fig 1 in einem Halbschnitt dargestellte Lagereinheit 2 ist als ein angestelltes Wälzlager in O-Anordnung ausgebildet. Es handelt sich hierbei insbesondere um eine Hauptlagereinheit für eine Windkraftanlage, wie sie beispielsweise in der EP 2 710 271 B1 beschrieben ist. Die Lagereinheit 2 weist ein Lagergehäuse 4 als ein äußeres Teil sowie eine Welle 6 als ein inneres Teil auf. Die Welle 6 ist als Hohlwelle ausgebildet. Lagergehäuse 4 und Welle 6 sind über zwei Lager 8 rotierbar aneinandergelagert. Je nach Ausführungsvariante rotiert entweder die Welle 6 oder das Lagergehäuse 4 um eine Rotationsachse 10 und bildet insoweit einen Rotor, während die jeweils andere Komponente einen Stator gebildet. Am Rotor, häufig die Welle 6, ist im Falle einer Windkraftanlage eine Nabe mit daran befestigten Rotorblätter befestigt.

Die beiden Lager 8 sind in einer Axialrichtung 12, die parallel zur Rotationsachse 10 verläuft, zueinander beispielsweise um zumindest den halben Lagerdurchmesser voneinander beabstandet. Jedes der Lager 8 weist einen Innenring 14, einen Außenring 16 sowie Wälzkörper 18 auf. Für die beiden Lager 14, 16 sind am Lagergehäuse 4 sowie an der Welle 6 jeweils an festen Axialpositionen Lagersitze ausgebildet, die beispielsweise durch Anschläge für einen jeweiligen Lagerring 14,16 definiert sind. Im Ausführungsbeispiel liegen insgesamt drei der vier Lagerringe 14,16 an einem solchen Anschlag an. Lediglich einer der Lagerringe, nämlich im Ausführungsbeispiel der auf der rechten Bildhälfte dargestellte Innenring 14 ist als ein axial Richtung 12 verstellbaren Lagerring 20 ausgebildet. Zur Einstellung einer Lagervorspannung wird dieser in Axialrichtung 12 verschoben. Die dabei erzeugte Kraft wird über die Lager, dass Lagergehäuse 4 und die Welle 6 übertragen.

Zur Einstellung und Aufrechterhaltung der Lagervorspannung ist ein Spannring 22 vorgesehen, welcher im Ausführungsbeispiel als eine Wellenmutter ausgebildet ist. Dieser Spannring 22 weist ein Innengewinde auf, mit dem er auf ein Gewinde 24 aufschraubbar ist, welches endseitig an der Welle 6 ausgebildet ist.

Da sowohl das Lagergehäuse 4 als auch die Welle 6 jeweils für die Anordnung eines Lagerrings 16,14 ausgebildet sind, können sie im Sinne der vorliegenden Anmeldung auch als Ringträger bezeichnet werden. Speziell bildet die Welle 6 einen Ringträger für den verstellbaren Lagerring 20. Bei einer X-Anordnung würde ein Außenring 16 den verstellbaren Lagerring 20 bildenden. In diesem Fall würde daher das äußere Teil, also das Lagergehäuse 4 den Ringträger für den verstellbaren Lagerring 20 bilden.

Anhand der Aufsicht auf den Spannring 22 mit Blickrichtung in Axialrichtung 12 ist zu erkennen, dass dieser um den Umfang verteilt mehrere Gewindebohrungen 26 mit jeweils einem Innengewinde aufweist. Im Ausführungsbeispiel sind 4 Gewindebohrungen 26 dargestellt, vorzugsweise ist die Anzahl größer und beträgt beispielsweise bei mehr als 8 oder auch mehr als 12. Die einzelnen Gewindebohrungen 26, die in der vergrößerten Darstellung gemäß der Fig 2B gut zu erkennen sind, verlaufen jeweils in Axialrichtung 12.

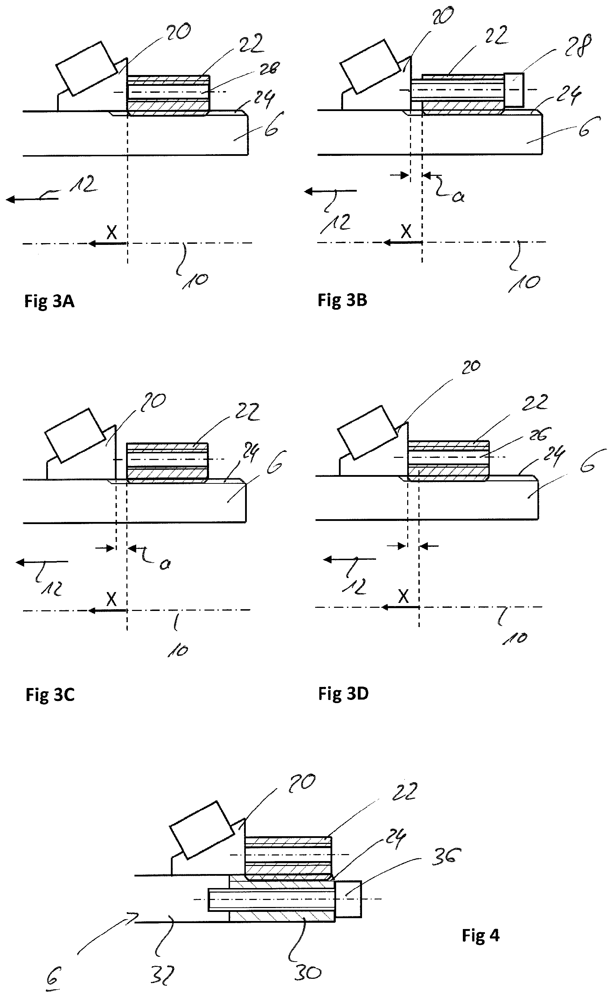

Zur Einstellung der Vorspannung gemäß einer ersten bevorzugten Variante sind als Hilfs-Spannelement Schrauben 28 vorgesehen, welche jeweils in eine Gewindebohrung 26 ein und durchgeschraubt werden. Das Verfahren zur Einstellung der Lagervorspannung gemäß dieser ersten Variante wird anhand der Figuren 3A bis 3B erläutert:
Fig 3A zeigt eine Ausgangsposition, wie sie auch in der Fig 1 dargestellt ist. Der Spannring 22 ist auf das Gewinde 24 aufgeschraubt und liegt vorzugsweise am verstellbaren Lagerring 20 an. Durch eine gestrichelte Hilfslinie ist eine axiale NullPosition des Lagerrings 20 angedeutet.

**In** einem ersten Schritt werden nunmehr die Schrauben 28 in die Gewindebohrungen 26 ein- und durchgeschraubt und angezogen, derart, dass sie auf den Lagerring 20 eine Axialkraft ausüben und diesen um ein Axialspiel a in Axialrichtung 12 versetzen. Dabei wird die Lagervorspannung erhöht. Dies bedeutet, dass die Lagervorspannung in diesem ersten Schritt mithilfe der als Schrauben 28 ausgebildeten Hilfs-Spannelemente aufgebracht wird. Der Spannring 22 verbleibt herbei ortsfest an seiner vorherigen Axialposition und wird auch nicht verdreht.

**In** einem nächsten Schritt werden die Schrauben 28 wieder gelöst und insbesondere auch entfernt, wie dies in der Fig 3C dargestellt ist.

Durch das im ersten Schritt eingestellte Axialspiel a und dem damit einhergehenden Abstand zwischen Lagerring 20 und Spannring 22 kann dieser auf dem Gewinde 24 frei drehen. In abschließenden Schritt wird der Spannring 22 auf dem Gewinde 24 weiter aufgedreht und zwar in Axialrichtung 12, bis er wieder am Lagerring 20 anliegt. Dadurch ist dieser in seiner gewünschten Axialposition gesichert.

Anhand der Fig 3B ist zu erkennen, dass die Schraube 28 bis zum Anschlag gegen den Spannring 22 verschraubt ist, bis sie also mit ihrem Kopf am Spannring 22 anliegt. Hierdurch ist ein vorgegebenes Axialspiel a definiert. Alternativ hierzu wird die Länge der Schraube 28 geeignet gewählt, sodass diese nicht auf Anschlag eingeschraubt wird. Das Axialspiel a wird hierbei durch einen definierten Drehwinkel quasi frei eingestellt.

In den Figuren 1 sowie 3A bis 3D ist das Gewinde 24 direkt in die Welle 6 eingearbeitet. Gemäß einer bevorzugten Ausgestaltung, wie sie in der Fig 4 dargestellt ist, ist ein insbesondere ringförmiges Gewindeelement 30 vorgesehen, welches endseitig an einem Hauptteil 32 der Welle 6 (Ringträger) insbesondere mittels Befestigungsschrauben 36 befestigt ist. Der Hauptteil 32 bildet zusammen mit dem Gewindeelement 30 die Welle 6 (Ringträger).

Die Einstellung der Lagervorspannung bei einer Ausgestaltung gemäß Fig 4 erfolgt beispielsweise analog zu dem Verfahren, wie es zu den Figuren 3A bis 3B beschrieben wurde.

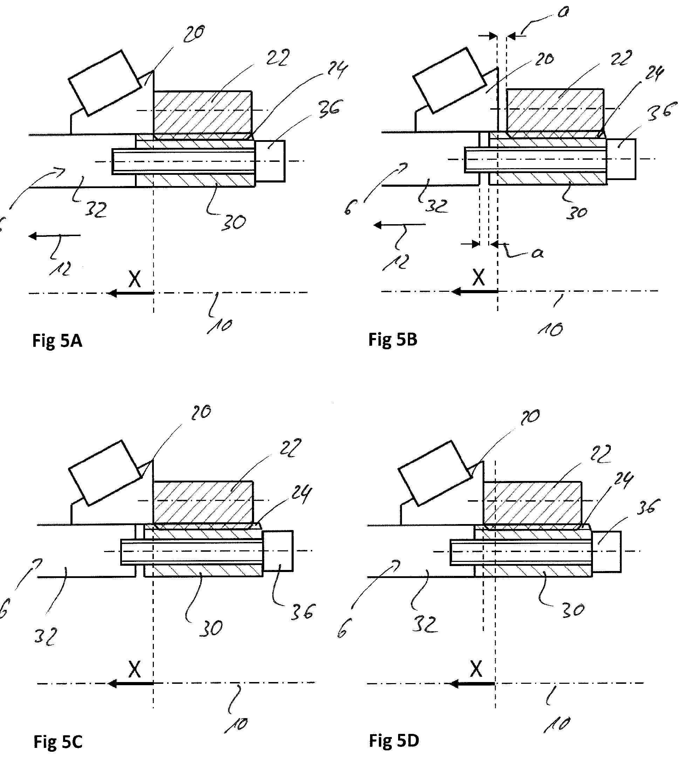

Anhand der Figuren 5A bis 5B wird eine zweite Variante für das Verfahren zur Einstellung der Lagervorspannung beschrieben. Diese Variante baut dabei auf der Ausgestaltung mit dem Gewindeelement 30 auf.

Bei dieser Variante wird allgemein im ersten Schritt zunächst ein Axialspiel zwischen dem Gewindeelement 30 und dem Hauptteil 32 eingestellt. Hierzu werden zunächst Befestigungselemente, speziell die Befestigungsschrauben 36 gelöst, mit denen das Gewindeelement 30 am Hauptteil 32 befestigt ist, sodass es relativ zum Hauptteil 32 versetzt werden kann.

Bei diesem Versetzen des Gewindeelements 30 nach hinten wird gemäß einer ersten Ausführungsvariante der Spannring 22 ebenfalls mit nach hinten versetzt, wie dies in der Fig 5B dargestellt ist. Hierzu ist beispielsweise eine zusätzliche, hier nicht näher dargestellte Abzugsvorrichtung vorgesehen, mit deren Hilfe das Gewindeelement 30 zusammen mit dem Spannring 22 nach hinten versetzt wird.

Zur Ausbildung dieser Abzugsvorrichtung sind insbesondere Gewindebohrungen durch das Gewindeelement 30 hindurchgeführt, durch die dann Abdrückelemente, wie beispielsweise Abdrückschrauben hindurchgeführt sind, die sich stirnseitig am Hauptteil 32 abstützen. Diese Gewindebohrungen und die Abdrückelemente sind beispielsweise zusätzlich zu den normalen Befestigungsschrauben 36 vorgesehen.

Ausgehend von der Position in Fig 5B wird der Spannring 22 anschließend in Richtung zum Lagerring 20 hin verdreht, bis er an diesem anliegt. Nachfolgend wird mithilfe der Hilfs-Spannelemente, die vorzugsweise durch die Befestigungselemente (Befestigungsschrauben 36) gebildet sind, die Lagervorspannung durch ein Verschieben des Lagerrings 20 eingestellt.

Hierzu wird das Gewindeelement 30 beispielsweise mithilfe der Befestigungsschrauben 36 wieder in Richtung zum Hauptteil 32 versetzt und zwar um das Axialspiel a.

Alternativ zu der in der Fig 5B dargestellten Situation wird das Axialspiel a dadurch eingestellt, dass der Spannring 22 verdreht wird, wobei er sich gleichzeitig am Lagerring 20 abstützt, sodass also das Gewindeelement 30 nach hinten gedrückt wird. Bei dieser Variante liegt also der Spannring 22 kontinuierlich am Lagerring 20 an.

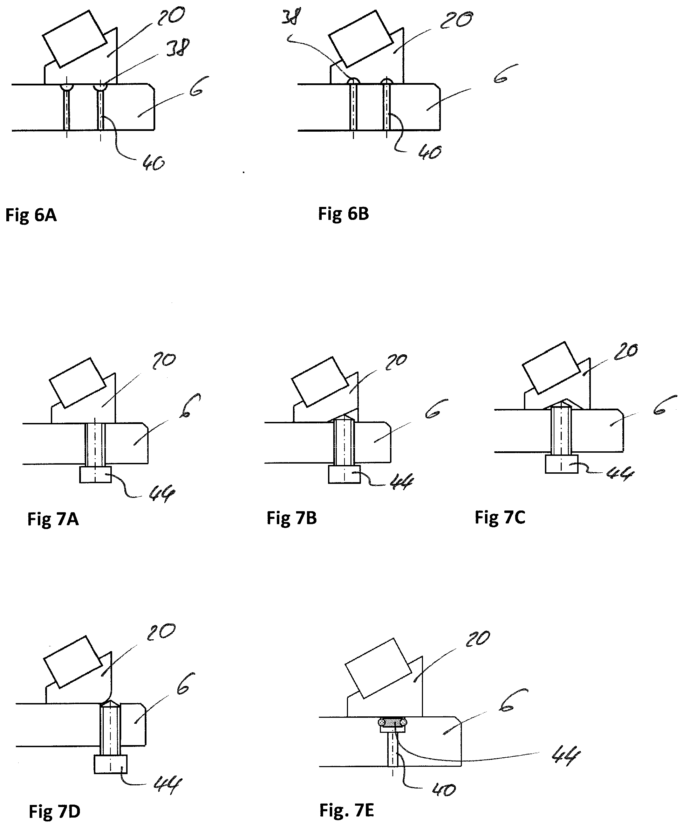

Bei der Einstellung der Lagervorspannung ist allgemein ein axiales Verschieben des Lagerrings 20 auf der Welle 6 erforderlich. Um hierzu die Reibung möglichst gering zu halten, ist eine Vorrichtung zur Reduzierung der (Gleit-) Reibung vorgesehen, wie sie schematisiert anhand der Figuren 6A bis 6B erläutert ist. Die Figuren 6A und 6B zeigen dabei eine Art Öl-Druckverband, bei dem ein Schmiermittel, wie eben ein Öl, in umlaufende Ringnuten 28 in einer Trennebene zwischen Welle 6 und Lagerring 20 mit definiertem Druck eingepresst wird. Die Ringnuten 28 sind dabei entweder in der Welle 6 (Fig 6A) oder im Lagerring 20 (Fig 6B) ausgebildet. Die Zufuhr des Schmiermittels erfolgt über radiale (Öldruck) Bohrungen 40, die mit einer entsprechenden Druckvorrichtung zur Bereitstellung und Erzeugung des erforderlichen Schmiermittel-Drucks verbunden sind.

Bei der ersten Variante, wie sie zu den Figuren 3A bis 3C erläutert ist, ist unter gewissen Bedingungen eine Sicherung der Axialposition von Vorteil, bis der Spannring 22 gegen den Lagerring 20 verdreht ist (vergleiche hierzu Figuren 3C und 3D).

Zur Sicherung der Axialposition (im Schritt gemäß Fig 3C) ist ein Sicherungselement 44 und vorzugsweise um den Umfang verteilt mehrere derartiger Sicherungselemente 44 ausgebildet. Dies wird anhand der Figuren 7A bis 7E näher erläutert. Die Sicherungselemente 44 sind gemäß den Figuren 7A bis 7D insbesondere als Bolzen oder Schrauben ausgeführt, die bevorzugt in radialer Richtung durch die (Hohl-) Welle 6 von innen hindurchgeführt sind. Allgemein sichern die Sicherungselemente 44 die axiale Position des Lagerrings 20 durch Reibung und /oder durch Formschluss. Speziell handelt sich bei den Sicherungselementen 44 um Schrauben, wie dies in den Figuren 7A bis 7D dargestellt ist. Alternativ kann es sich auch um hydraulisch betätigte Sicherungselemente, wie beispielsweise einfahrbare Bolzen oder Reibelemente handeln, wie dies z.B. beim Ausführungsbeispiel der Fig. 7E vorgesehen ist.

Gemäß der Variante der Fig 7A werden die Sicherungselemente 44 lediglich gegen den Lagerring 20 verspannt, sodass hier lediglich eine reibschlüssige Verbindung ausgebildet ist. Bei den Varianten gemäß den Figuren 7B bis 7D ist jeweils eine formschlüssige Sicherung vorgesehen, bei denen das Sicherungselement 44 einen Formschluss mit einem Teilbereich des Lagerrings 20 ausbildet. Speziell weist dieser an seiner Unterseite Ausnehmungen oder Freiräume auf, in die das Sicherungselement mit einem stirnseitigen Ende eingreift. Bevorzugt ist dabei ein Teilstück der unter Seite des Lagerrings 20 schräg orientiert bezüglich der Axialrichtung 12. Alternativ oder ergänzend weist auch das Sicherungselement 44 stirnseitig eine schräge, insbesondere eine konische Spitze auf. Diese wirkt mit dem schräg orientierten Teilstück zusammen.

Bei der Ausführungsvariante gemäß der Fig 7D liegt die Spitze des Sicherungselements 44 an einer abgeschrägten oder auch abgerundeten Kante des Lagerrings 20 an. Diese Kante bildet insofern ebenfalls ein schräges Teilstück. Durch die schräge oder abgerundete Ausgestaltung des jeweiligen Teilstücks und/oder der Stirn des Sicherungselements 44 ist eine axiale Toleranzlänge ausgebildet, über die die formschlüssige Sicherung ausgebildet sein kann.

Bei der Ausführungsvariante gemäß der Fig. 7E wird als Sicherungselement 44 ein Reibelement, welches insbesondere ringförmig umlaufend ausgebildet ist, gegen den Lagerring 20 verspannt. Alternativ können auch ein oder mehrere diskrete Reibelemente um den Umfang verteilt verwendet werden. Das zumindest eine Reibelement weist beispielsweise eine reibungserhöhende Oberfläche / Beschichtung, wie beispielsweise eine Diamantbeschichtung auf. Das Reibelement wird bei Bedarf gegen die Unterseite des Lagerrings 20 verspannt. Dies kann z.B. mechanisch erfolgen, vorzugsweise jedoch hydraulisch, wie dies in Fig. 7E dargestellt ist. Ähnlich wie beim Öl-Druckverband ist auch hier eine Bohrung 40 vorgesehen, über die ein Fluid eingepresst wird und das Reibelement radial nach außen presst.

Alternativ oder ergänzend zum Reibschluss wird zwischen dem zumindest einen Reibelement und dem Lagerring eine formschlüssige Verbindung ausgebildet. Speziell hierzu - aber auch bei einer rein reibschlüssigen Verbindung - ist vorzugsweise ein insbesondere ringförmiger Teilbereich der Unterseite des Lagerrings 20, der dem Reibelement gegenüberliegend angeordnet ist, speziell präpariert. Beispielsweise ist eine (Ring-) Fläche ausgebildet, die bevorzugt etwas gegenüber einer sonstigen Auflagefläche des Lagerrings 20 zurückversetzt ist, mit der dieser auf dem Ringträger (Welle 6) aufliegt. Diese (Ring-) Fläche weist beispielsweise ebenfalls eine reibungserhöhende Oberfläche auf oder ist für eine Formschlüssige Verbindung ausgebildet. Für die Formschlüssige Verbindung sind z.B. ineinandergreifende Vorsprünge / Einbuchtungen, z.B. Rillen und Nuten mit einer geeigneten Feinstruktur vorgesehen.

Die vorliegende Erfindung baut zusammenfassend allgemein darauf auf, dass die Lagervorspannung mittels des Spannrings 22 aufgebracht wird, welcher insbesondere als Wellenmutter ausgebildet ist. Zur Einstellung der Vorspannung wird das Hilfs-Spannelement insbesondere in Form einer Schraube (28,36) verwendet und es wird zunächst ein Axialspiel a erzeugt. Die Wellenmutter ist allgemein auf dem ihr zugeordneten Gewindebauteil in einem Zustand quasi lastfrei drehbar, also ohne Vorspannung. Die Erfindung beinhaltet dabei zwei Hauptvarianten: Bei der ersten Hauptvariante, wie sie in den Figuren 3A bis 3D dargestellt ist, wird der Lagerring 20 mit Hilfe des Hilfs-Spannelements um das Axialspiel a verschoben. Hierzu wird insbesondere die Spannschraube 28 durch die Wellenmutter hindurchgeschraubt und verschiebt den Lagerring 20. Nach Lösen des Hilfs-Spannelements / der Spannschrauben 28 wird der Spannring 22 lastfrei in Richtung zum Lagerring 20 versetzt, insbesondere wird die Wellenmutter lastfrei in Richtung zum Lagerring 20 geschraubt.

Bei der zweiten Hauptvariante wie sie zu den Figuren 5A bis 5D beschrieben ist, ist das Gewindeelement 30 vorgesehen, auf das der Spannring 22 (Wellenmutter) aufgeschraubt ist. Mittels einer nicht näher dargestellten Abzugsvorrichtung oder alternativ mithilfe des Spannrings 22 wird das Gewindeelement 30 verschoben, sodass der axiale Abstand a zwischen Gewindeelement 30 und Welle 6 eingestellt wird. Auch hier wird die Wellenmutter jeweils lastfrei verdreht (entweder wird das Gewindeelement mittels Drehen der Wellenmutter entgegen der Axialrichtung 12 verschoben oder die Wellenmutter wird nach dem Verschieben des Gewindeelements 30 wieder in Richtung zum Lagerring 20 geschraubt. Nachfolgend wird - bei am Lagerring 20 anliegender Wellenmutter - mithilfe insbesondere der Befestigungsschrauben 36 die Lagervorspannung auf den Lagerring 20 übertragen.

Sämtliche Varianten sind dadurch gekennzeichnet, dass die Wellenmutter 22 lastfrei verdreht wird und zwar in Richtung zum Lagerring 20. Hierunter wird verstanden, dass während des Verdrehens keine Axialkraft auf den Lagerring 20 zur Veränderung der Vorspannung übertragen wird. Unter in Richtung zum Lagerring verdrehen wird hierbei insbesondere eine axiale Relativbewegung des Spannrings auf den Lagerring zu verstanden. Alternativ wird - speziell bei der Variante mit dem Gewindeelement 30, welches in einer Variante durch Verdrehen des Spannrings 22 axial versetzt wird - unter in Richtung zum Lagerring verdrehen ein Verdrehen ohne axiale Relativbewegung zwischen dem Lagerring und dem Spannring verstanden. In allen Fällen wird die Lagervorspannung mit dem Hilfs-Spannelement und nicht mit dem Spannring erzeugt und verändert. Der Spannring dient quasi lediglich zum Halten der über das Hilfs-Spannelement eingestellten Lagervorspannung.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen. Die Erfindung wird durch die nachfolgenden Ansprüche definiert.

### Bezugszeichenliste

- 2: Lagereinheit
- 4: Lagergehäuse
- 6: Welle
- 8: Lager
- 10: Rotationsachse
- 12: Axialrichtung
- 14: Innenring
- 16: Außenring
- 18: Wälzkörper
- 20: verstellbaren Lagerring
- 22: Spannring
- 24: Gewinde
- 26: Gewindebohrung
- 28: Schraube
- 30: Gewindeelement
- 32: Hauptteil
- 36: Befestigungsschraube
- 38: Ringnut
- 40: Bohrung
- 42: Gleitelement
- 44: Sicherungselement

## Patentansprüche

1. Verfahren zum Aufbringen einer Lagervorspannung auf eine Lagereinheit (2), insbesondere einer Hauptlagereinheit einer Windkraftanlage, wobei die Lagereinheit (2) sich entlang einer Rotationsachse (10) in einer Axialrichtung (12) erstreckt und einen Lagerring (20) aufweist, der zur Aufbringung der Lagervorspannung in Axialrichtung (12) entlang eines insbesondere als Welle (6) ausgebildeten Ringträgers verstellbar ist, wobei der Ringträger ein Gewinde (24) aufweist, das Teil eines optionalen Gewindeelements (30) sein kann, und ein insbesondere als Wellenmutter ausgebildeter Spannring (22) zur Aufbringung der Lagervorspannung gegen den Lagerring (20) verschraubbar ist, **dadurch gekennzeichnet, dass**
- in einem ersten Schritt zumindest eine der Komponenten ausgewählt aus Spannring (22), Lagerring (20) und Gewinde (24) bzw. Gewindeelement (30) axial versetzt wird, so dass
i) in dem ersten Schritt zunächst ein Axialspiel zwischen dem Lagerring (20) und dem Spannring (22) eingestellt wird, und in einem weiteren Schritt der Spannring (22) lastfrei gegen den Lagerring (20) verschraubt wird, oder
ii) in einem ersten Schritt ein Axialspiel zwischen dem Lagerring (20) und dem Gewinde (24) bzw. Gewindeelement (30) eingestellt wird, wobei
- mit Hilfe eines Hilfs-Spannelements die Lagervorspannung eingestellt wird.

2. Verfahren nach dem vorhergehenden Anspruch, wobei der Lagerring mit Hilfe des Hilfs-Spannelements zur Einstellung der Lagervorspannung in Axialrichtung versetzt wird und eine Axialkraft zur Einstellung der Lagervorspannung auf den Lagerring überträgt.

3. Verfahren nach einem der vorhergehenden Ansprüche, **dadurch gekennzeichnet, dass** mit Hilfe des Hilfs-Spannelements das Axialspiel eingestellt wird.

4. Verfahren nach einem der vorhergehenden Ansprüche, **dadurch gekennzeichnet, dass** das das zumindest eine Hilfs-Spannelement sich zumindest mittelbar beim Erzeugen des Axialspiels am Spannring abstützt und insbesondere durch diesen hindurchgeführt ist.

5. Verfahren nach einem der vorhergehenden Ansprüche, **dadurch gekennzeichnet, dass** bei dem ersten Schritt des Einstellens des Axialspiels das zumindest eine Hilfs-Spannelement sich am Lagerring abstützt und in Axialrichtung eine Spannkraft auf den Lagerring ausgeübt und ihn dadurch verschiebt.

6. Verfahren nach einem der vorhergehenden Ansprüche, **dadurch gekennzeichnet, dass** das Hilfs-Spannelement eine Schraube ist und insbesondere durch den Spannring geschraubt ist.

7. Verfahren nach einem der vorhergehenden Ansprüche, **dadurch gekennzeichnet, dass** das Hilfs-Spannelement nach dem ersten Schritt des Einstellens des Axialspiels wieder gelöst wird, bevor im weiteren Schritt der Spannring gegen den Lagerring verschraubt wird.

8. Verfahren nach einem der vorhergehenden Ansprüche, **dadurch gekennzeichnet, dass** nach dem ersten Schritt des Einstellens des Axialspiels die axiale Position des Lagerrings mit Hilfe zumindest eines Sicherungselements gesichert wird, wobei bevorzugt das zumindest eine Sicherungselement ein radialer Bolzen ist, der durch den Ringträger geführt ist und den Lagerring reib- und / oder formschlüssig sichert.

9. Verfahren nach einem der vorhergehenden Ansprüche, **dadurch gekennzeichnet, dass** der Ringträger einen Hauptteil aufweist, an dem das Gewindeelement befestigt ist und der Spannring auf das Gewindeelement geschraubt ist und dass bei dem ersten Schritt des Einstellens des Axialspiels das Gewindeelement axial verschoben wird und das Axialspiel eingestellt wird.

10. Verfahren nach dem vorhergehenden Anspruch, **dadurch gekennzeichnet, dass** das Gewindeelement mit Hilfe des Hilfs-Spannelementes oder alternativ mit Hilfe des Spannrings axial verschoben wird, wobei bevorzugt nachfolgend zum ersten Schritt das Gewindeelement zusammen mit dem Spannring in Axialrichtung versetzt wird, so dass der Spannring gegen den Lagerring gepresst wird und diesen in Axialrichtung verschiebt.

11. Verfahren nach einem der vorhergehenden Ansprüche, **dadurch gekennzeichnet, dass** die Schritte des Einstellens des Axialspiels und das Aufbringen der Lagervorspannung mit Hilfe des zumindest einen Hilfs-Spannelementes mehrfach wiederholt werden.

12. Verfahren nach einem der vorhergehenden Ansprüche, bei dem bei Bedarf im ersten Schritt das Axialspiel zwischen dem Spannring und dem Lagerring ausgebildet wird, insbesondere durch ein Zurückdrehen / Lösen des Spannrings und dass anschließend mittels des Hilfs-Spannelementes der Lagerring entgegen der Axialrichtung zur Reduzierung der Lagervorspannung versetzt wird.

13. Lagereinheit (2), insbesondere Hauptlagereinheit einer Windkraftanlage, die sich entlang einer Rotationsachse (10) in einer Axialrichtung (12) erstreckt und einen Lagerring (20) aufweist, der zur Aufbringung der Lagervorspannung in Axialrichtung (12) entlang eines Ringträgers verstellbar ist, wobei der Ringträger ein Gewinde (24) aufweist, das Teil eines optionalen Gewindeelements (30) sein kann, und ein insbesondere als Wellenmutter ausgebildeten Spannring (22) zur Aufbringung der Lagervorspannung gegen den Lagerring (20) verschraubbar ist, **dadurch gekennzeichnet, dass** ein Widerlager für zumindest ein Hilfs-Spannelement vorgesehen ist, an dem sich das Hilfs-Spannelement zumindest temporär abstützen kann, derart, dass über das Hilfs-Spannelement die Lagervorspannung aufgebracht werden kann, wobei zumindest eine der Komponenten ausgewählt aus Spannring (22), Lagerring (20) und Gewinde (24) bzw. Gewindeelement (30) axial versetzbar ist, so dass
i) in einem ersten Schritt ein Axialspiel zwischen dem Lagerring (20) und dem Spannring (22) einstellbar ist, so dass der Spannring (22) lastfrei auf dem Gewinde (24) des Ringträgers in Richtung zum Lagerring (20) verschraubbar ist, oder
ii) in einem ersten Schritt ein Axialspiel zwischen dem Lagerring (20) und dem Gewinde (24) bzw. Gewindeelement (30) einstellbar ist.

14. Lagereinheit nach dem vorhergehenden Anspruch, **dadurch gekennzeichnet, dass** das Widerlager durch den Spannring gebildet ist, und das Hilfs-Spannelement insbesondere durch den Spannring hindurchführbar ist.

15. Lagereinheit nach einem der beiden vorhergehenden Ansprüche , **dadurch gekennzeichnet, dass** an dem Ringträger ein Gewindeelement befestigt ist und der Spannring auf das Gewindeelement geschraubt ist und dass zum Einstellen des Axialspiels das Gewindeelement mit dem daran befestigten Spannring axial verschiebbar ist.

## Claims

1. Method for applying a bearing preload to a bearing unit (2), in particular a main bearing unit of a wind turbine, wherein the bearing unit (2) extends along an axis of rotation (10) in an axial direction (12) and has a bearing ring (20) which, for the application of the bearing preload, is adjustable along a ring carrier, which is in particular in the form a shaft (6), in the axial direction (12), wherein the ring carrier has a thread (24), which may be part of an optional threaded element (30), and a clamping ring (22), in particular in the form of a shaft nut, is, for the application of the bearing preload, screwable against the bearing ring (20), **characterized in that**,
- in a first step, at least one of the components selected from the clamping ring (22), the bearing ring (20) and the thread (24) or threaded element (30) is moved axially such that,
i) in the first step, first of all an axial clearance between the bearing ring (20) and the clamping ring (22) is set and, in a further step, the clamping ring (22) is screwed against the bearing ring (20) without load, or,
ii) in a first step, an axial clearance between the bearing ring (20) and the thread (24) or threaded element (30) is set, wherein
- the bearing preload is set with the aid of an auxiliary clamping element.

2. Method according to the preceding claim, wherein the bearing ring is moved in the axial direction with the aid of the auxiliary clamping element for setting the bearing preload, and an axial force for setting the bearing preload is transmitted to the bearing ring.

3. Method according to either of the preceding claims, **characterized in that** the axial clearance is set with the aid of the auxiliary clamping element.

4. Method according to one of the preceding claims, **characterized in that** the at least one auxiliary clamping element is supported at least indirectly against the clamping ring when the axial clearance is realized and is passed in particular therethrough.

5. Method according to one of the preceding claims, **characterized in that**, in the first step for setting the axial clearance, the at least one auxiliary clamping element is supported against the bearing ring and exerts a clamping force on, and consequently displaces, the bearing ring in the axial direction.

6. Method according to one of the preceding claims, **characterized in that** the auxiliary clamping element is a screw and is screwed in particular through the clamping ring.

7. Method according to one of the preceding claims, **characterized in that**, after the first step for setting the axial clearance, the auxiliary clamping element is loosened again before, in the further step, the clamping ring is screwed against the bearing ring.

8. Method according to one of the preceding claims, **characterized in that**, after the first step for setting the axial clearance, the axial position of the bearing ring is secured with the aid of at least one securing element, wherein preferably the at least one securing element is a radial pin which is passed through the ring carrier and which secures the bearing ring in a frictionally engaging and/or form-fitting manner.

9. Method according to one of the preceding claims, **characterized in that** the ring carrier has a main part to which the threaded element is fastened and the clamping ring is screwed onto the threaded element, and **in that**, in the first step for setting the axial clearance, the threaded element is displaced axially and the axial clearance is set.

10. Method according to the preceding claim, **characterized in that** the threaded element is displaced axially with the aid of the auxiliary clamping element or alternatively with the aid of the clamping ring, wherein preferably, after the first step, the threaded element is moved together with the clamping ring in the axial direction such that the clamping ring is pressed against the bearing ring and displaces the latter in the axial direction.

11. Method according to one of the preceding claims, **characterized in that** the steps for setting the axial clearance and for applying the bearing preload with the aid of the at least one auxiliary clamping element are repeated multiple times.

12. Method according to one of the preceding claims, in which, according to requirement, in the first step, the axial clearance between the clamping ring and the bearing ring is formed in particular by turning back/releasing the clamping ring, and in that subsequently the bearing ring is moved counter to the axial direction by means of the auxiliary clamping element to reduce the bearing preload.

13. Bearing unit (2), in particular main bearing unit of a wind turbine, which extends along an axis of rotation (10) in an axial direction (12) and has a bearing ring (20) which, for the application of the bearing preload, is adjustable along a ring carrier in the axial direction (12), wherein the ring carrier has a thread (24), which may be part of an optional threaded element (30), and a clamping ring (22), in particular in the form of a shaft nut, is, for the application of the bearing preload, screwable against the bearing ring (20), **characterized in that** provision is made of a counterbearing for at least one auxiliary clamping element, against which the auxiliary clamping element can be supported at least temporarily, in such a way that the bearing preload can be applied via the auxiliary clamping element, wherein at least one of the components selected from the clamping ring (22), the bearing ring (20) and the thread (24) or threaded element (30) is able to be moved axially such that,
i) in a first step, an axial clearance between the bearing ring (20) and the clamping ring (22) is settable, so that the clamping ring (22) is screwable on the thread (24) of the ring carrier in the direction of the bearing ring (20) without load, or
ii) in a first step, an axial clearance between the bearing ring (20) and the thread (24) or threaded element (30) is settable.

14. Bearing unit according to the preceding claim, **characterized in that** the counterbearing is formed by the clamping ring, and the auxiliary clamping element is able to be passed in particular through the clamping ring.

15. Bearing unit according to either of the two preceding claims, **characterized in that** a threaded element is fastened to the ring carrier and the clamping ring is screwed onto the threaded element, and **in that**, for setting the axial clearance, the threaded element is axially displaceable with the clamping ring fastened thereto.

## Revendications

1. Procédé permettant d'appliquer une précontrainte de palier à une unité de palier (2), en particulier une unité de palier principale d'une éolienne, dans lequel l'unité de palier (2) s'étend le long d'un axe de rotation (10) dans une direction axiale (12) et présente une bague de palier (20) qui, pour l'application de la précontrainte de palier, peut être déplacée dans la direction axiale (12) le long d'un support de bague réalisé en particulier sous forme d'arbre (6), dans lequel le support de bague présente un filetage (24) qui peut faire partie d'un élément fileté (30) optionnel, et une bague de serrage (22) réalisée en particulier sous forme d'écrou d'arbre peut être vissée contre la bague de palier (20) pour l'application de la précontrainte de palier, **caractérisé en ce que**
- dans une première étape, au moins l'un des composants sélectionnés parmi la bague de serrage (22), la bague de palier (20) et le filetage (24) ou l'élément fileté (30) est décalé axialement, de telle sorte que
i) dans la première étape, tout d'abord un jeu axial entre la bague de palier (20) et la bague de serrage (22) est réglé et, dans une autre étape, la bague de serrage (22) est vissée sans charge contre la bague de palier (20), ou
ii) dans une première étape, un jeu axial entre la bague de palier (20) et le filetage (24) ou l'élément fileté (30) est réglé, dans lequel
- à l'aide d'un élément de serrage auxiliaire, la précontrainte de palier est réglée.

2. Procédé selon la revendication précédente, dans lequel la bague de palier est décalée dans la direction axiale à l'aide de l'élément de serrage auxiliaire pour le réglage de la précontrainte de palier et une force axiale est transmise à la bague de palier pour le réglage de la précontrainte de palier.

3. Procédé selon l'une des revendications précédentes, **caractérisé en ce qu'**à l'aide de l'élément de serrage auxiliaire, le jeu axial est réglé.

4. Procédé selon l'une des revendications précédentes, **caractérisé en ce que** l'au moins un élément de serrage auxiliaire s'appuie au moins indirectement contre la bague de serrage lors de la production du jeu axial et est guidé en particulier à travers celle-ci.

5. Procédé selon l'une des revendications précédentes, **caractérisé en ce que**, lors de la première étape de réglage du jeu axial, l'au moins un élément de serrage auxiliaire s'appuie contre la bague de palier et exerce une force de serrage sur la bague de palier dans la direction axiale et déplace ainsi celle-ci.

6. Procédé selon l'une des revendications précédentes, **caractérisé en ce que** l'élément de serrage auxiliaire est une vis et est vissé en particulier à travers la bague de serrage.

7. Procédé selon l'une des revendications précédentes, **caractérisé en ce que** l'élément de serrage auxiliaire est, après la première étape de réglage du jeu axial, à nouveau desserré, avant que la bague de serrage ne soit vissée contre la bague de palier dans l'étape suivante.

8. Procédé selon l'une des revendications précédentes, **caractérisé en ce qu'**après la première étape de réglage du jeu axial, la position axiale de la bague de palier est fixée à l'aide d'au moins un élément de fixation, l'au moins un élément de fixation étant de préférence un boulon radial qui est guidé à travers le support de bague et fixe la bague de palier par friction et/ou par complémentarité de formes.

9. Procédé selon l'une des revendications précédentes, **caractérisé en ce que** le support de bague présente une pièce principale à laquelle l'élément fileté est fixé et la bague de serrage est vissée sur l'élément fileté et **en ce que**, lors de la première étape de réglage du jeu axial, l'élément fileté est déplacé axialement et le jeu axial est réglé.

10. Procédé selon la revendication précédente, **caractérisé en ce que** l'élément fileté est déplacé axialement à l'aide de l'élément de serrage auxiliaire ou en variante à l'aide de la bague de serrage, l'élément fileté étant de préférence, après la première étape, décalé conjointement avec la bague de serrage dans la direction axiale, de telle sorte que la bague de serrage soit pressée contre la bague de palier et déplace celle-ci dans la direction axiale.

11. Procédé selon l'une des revendications précédentes, **caractérisé en ce que** les étapes de réglage du jeu axial et l'application de la précontrainte de palier à l'aide de l'au moins un élément de serrage auxiliaire sont répétées plusieurs fois.

12. Procédé selon l'une des revendications précédentes, dans lequel, si nécessaire, le jeu axial est réalisé entre la bague de serrage et la bague de palier dans la première étape, en particulier par un dévissage/desserrage de la bague de serrage et ensuite, au moyen de l'élément de serrage auxiliaire, la bague de palier est décalée dans le sens inverse de la direction axiale pour la réduction de la précontrainte de palier.

13. Unité de palier (2), en particulier unité de palier principale d'une éolienne, qui s'étend le long d'un axe de rotation (10) dans une direction axiale (12) et présente une bague de palier (20) qui, pour l'application de la précontrainte de palier, peut être déplacée dans la direction axiale (12) le long d'un support de bague, dans laquelle le support de bague présente un filetage (24) qui peut faire partie d'un élément fileté (30) optionnel, et une bague de serrage (22) réalisée en particulier sous forme d'écrou d'arbre peut être vissée contre la bague de palier (20) pour l'application de la précontrainte de palier, **caractérisée en ce qu'**une butée pour au moins un élément de serrage auxiliaire est prévue, contre laquelle l'élément de serrage auxiliaire peut s'appuyer au moins temporairement, de telle sorte que, par le biais de l'élément de serrage auxiliaire, la précontrainte de palier peut être appliquée, au moins l'un des composants sélectionnés parmi la bague de serrage (22), la bague de palier (20) et le filetage (24) ou l'élément fileté (30) pouvant être décalé axialement, de telle sorte que
i) dans une première étape, un jeu axial entre la bague de palier (20) et la bague de serrage (22) peut être réglé de telle sorte que la bague de serrage (22) puisse être vissée sans charge sur le filetage (24) du support de bague dans la direction de la bague de palier (20), ou
ii) dans une première étape, un jeu axial entre la bague de palier (20) et le filetage (24) ou l'élément fileté (30) peut être réglé.

14. Unité de palier selon la revendication précédente, **caractérisée en ce que** la butée est formée par la bague de serrage, et l'élément de serrage auxiliaire peut être guidé en particulier à travers la bague de serrage.

15. Unité de palier selon l'une des deux revendications précédentes, **caractérisée en ce qu'**un élément fileté est fixé au support de bague et la bague de serrage est vissée sur l'élément fileté et **en ce que**, pour le réglage du jeu axial, l'élément fileté doté de la bague de serrage fixée à celui-ci peut être déplacé axialement.
